(19) Europäisches Patentamt
European Patent Office
Office européen des brevets

(11) Veröffentlichungsnummer: **0 041 140**
**B1**

(12)
# EUROPÄISCHE PATENTSCHRIFT

(45) Veröffentlichungstag der Patentschrift: **31.10.84**

(51) Int. Cl.³: **C 09 B 53/02**, C 09 B 67/44, C 07 C 119/06, C 09 G 1/08

(21) Anmeldenummer: **81103468.5**

(22) Anmeldetag: **07.05.81**

(54) **Flüssigeinstellungen von Oxidationsfarbstoffen.**

(30) Priorität: **02.06.80 DE 3020891**

(43) Veröffentlichungstag der Anmeldung: **09.12.81 Patentblatt 81/49**

(45) Bekanntmachung des Hinweises auf die Patenterteilung: **31.10.84 Patentblatt 84/44**

(84) Benannte Vertragsstaaten: **CH DE FR GB IT LI**

(56) Entgegenhaltungen:
**DE - C - 602 013**
**FR - A - 1 043 787**
**FR - A - 2 241 589**
**FR - A - 2 359 182**
**GB - A - 2 018 303**

(73) Patentinhaber: **BASF Aktiengesellschaft, Carl-Bosch-Strasse 38, D-6700 Ludwigshafen (DE)**

(72) Erfinder: **Hansen, Güenter, Dr., Alwin-Mittasch-Platz 8, D-6700 Ludwigshafen (DE)**
Erfinder: **Kolbinger, Hans Jörgen, Dr., Westring 60, D-6718 Gruenstadt (DE)**
Erfinder: **Senninger, Rudolf, Dr., Am Dorfzaun 10, D-6700 Ludwigshafen (DE)**
Erfinder: **Zeidler, Georg, Mutterstadter Strasse 7, D-6701 Dannstadt-Schauernheim (DE)**

**EP 0 041 140 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft Flüssigeinstellungen von Farbstoffen, die durch Oxidation von Verbindungen der allgemeinen Formel I

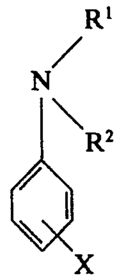

(I)

in der

$R^1$ gegebenenfalls durch Hydroxy, $C_1$- bis $C_8$-Alkoxy oder $C_1$- bis $C_8$-Alkanoyloxy substituiertes $C_2$- bis $C_{13}$-Alkyl,
$R^2$ Wasserstoff oder gegebenenfalls durch Hydroxy oder $C_1$- bis $C_8$-Alkoxy substituiertes $C_1$- bis $C_{13}$-Alkyl und
X Hydroxy, Amino oder

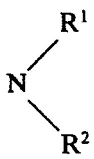

bedeuten,

in organischen Lösungsmitteln erhältlich sind.

Als organische Lösungsmittel bei der Herstellung der Flüssigeinstellungen eignen sich insbesondere Alkohole, Kohlenwasserstoffe, Halogenkohlenwasserstoffe, Amide, Ketone oder auch Nitrile. Im einzelnen seien als Lösungsmittel beispielsweise genannt:
Methanol, Äthanol, Propanol, Isopropanol, Butanol, Isobutanol, Methoxypropanol, Acetonitril, Methyl-n-propylketon, Dipropylketon, Toluol, Xylole, Alkylbenzolgemische (z. B. unter dem Handelsnamen ®Shellsol bekannte Lösungsmittel), Chlorbenzol, Dimethylformamid oder N-Methylpyrrolidon sowie Paraffinöl und vorzugsweise $\beta$-Ethylhexanol.

Bevorzugte Oxidationsmittel sind Sauerstoff und insbesondere Luft, zweckmäßigerweise in Gegenwart eines Katalysators, beispielsweise der in den Deutschen Offenlegungsschriften 2 333 925 und 2 427 606 beschriebenen Verbindungen. Bei diesen Verbindungen handelt es sich um Eisenkomplexe des Tetraazaannulens, das noch weiter u. a. durch Arylazogruppen substituiert sein kann. Diese Eisenkomplexe zeichnen sich durch eine hohe katalytische Aktivität aus und werden vorzugsweise zusammen mit Halogenchinonen für Oxidationsreaktionen verwendet.

Einzelne Reste $R^1$ sind beispielsweise:

$C_6H_{13}$ $C_7H_{15}$ $C_8H_{17}$ 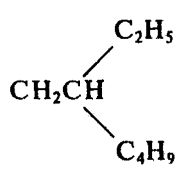 $C_9H_{19}$ $C_{10}H_{21}$ $C_{11}H_{23}$

$C_{12}H_{25}$ $C_{13}H_{27}$ $C_6H_{12}OH$ 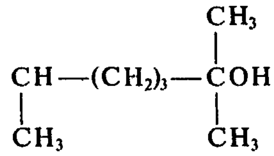 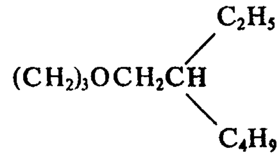

oder $CH_2CH_2OCOC_7H_{15}$.

Die Formeln umfassen jeweils die n- und i-Verbindungen.

Für $R^2$ sind die gleichen Reste sowie Methyl zu nennen. Bevorzugt sind Verbindungen, bei denen $R^1$ + $R^2$ mindestens 6 C-Atome enthalten. Weiterhin sind bevorzugt Verbindungen, bei denen einer der Reste $R^1$ und $R^2$ Wasserstoff ist und außerdem solche, für die X Hydroxy oder Amino ist.

Die erfindungsgemäßen Flüssigeinstellungen werden zweckmäßigerweise so hergestellt, daß man die Verbindungen der Formel I in einem organischen Lösungsmittel, vorzugsweise Alkohol, löst und nach Zugabe des Katalysators Luft hindurchleitet, bis dünnschichtchromatographisch kein Ausgangsprodukt mehr nachzuweisen ist. Reaktionstemperaturen von ungefähr 20 bis 100°C, vorzugsweise 40 bis 60°C, sind zweckmäßig. Die Reaktionszeiten liegen in der Regel zwischen 4 und 20 Stunden. Nach der Oxidation kann das Lösungsmittel vorzugsweise unter vermindertem Druck abdestilliert und durch das für den vorgesehenen Verwendungszweck am besten geeignete ersetzt werden. Man kann natürlich auch, wenn es sich durch Vorversuche als geeignet erwiesen hat, von vornherein dieses Lösungsmittel bei der Oxidationsreaktion verwenden.

Die Verwendung eines niedrigsiedenden Lösungsmittels kann zweckmäßig sein, weil man durch Abdestillieren leicht eine gewünschte Konzentration einstellen kann.

Die Oxidationsreaktionen können in der Regel in hochkonzentrierter Lösung, z. B. 20 bis 80%iger, durchgeführt werden; in einigen Fällen gelingt es auch, ganz ohne Lösungsmittel auszukommen.

Die erfindungsgemäßen Flüssigeinstellungen eignen sich zum Färben von Mineralölprodukten, Fetten und insbesondere Wachsen, beispielsweise für Schuhcreme. Die Farbtöne umfassen im wesentlichen Braunnuancen.

Von besonderer Bedeutung sind Flüssigeinstellungen, die ausgehend von Verbindungen der Formel

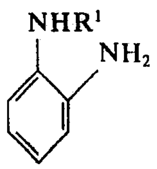

erhältlich sind.

Bevorzugte Reste $R^1$ sind dabei:

$$CH_3-(CH_2)_3-\underset{|}{CH}-C_2H_5 \qquad -CH_2-(CH_2)_6-CH_3 \qquad -CH_2-\underset{\underset{C_2H_5}{|}}{CH}-C_4H_9$$

$$-C_{13}H_{27} \quad \text{oder} \quad -(CH_2)_3-O-CH_2-\underset{\underset{C_2H_5}{|}}{CH}-C_4H_9$$

In den folgenden Beispielen beziehen sich Angaben über Teile und Prozente, sofern nicht anders vermerkt, auf das Gewicht.

## Beispiel 1

Zu einer Lösung von 22,0 Teilen N-(2-Äthylhexyl)-o-phenylendiamin in 100 Teilen Isopropanol fügt man 1 Teil des Fe-Komplexes des Dihydrodibenzotetraaza[14]-annulens hinzu, erwärmt auf etwa 50°C und leitet unter kräftigem Rühren einen gelinden Luftstrom durch das Reaktionsgemisch. Nach ungefährt 5 Stunden ist dünnschichtchromatographisch kein Ausgangsmaterial mehr nachweisbar. Nachdem man den Katalysator durch Filtrieren oder Dekantieren entfernt hat, destilliert man das Lösungsmittel, vorzugsweise unter vermindertem Druck, ab. Der Rückstand ist in Kohlenwasserstoffen sehr gut löslich und eignet sich daher als ca. 70%ige Lösung in Toluol vorzüglich zum Färben von Schuhcreme.

Die in der nachfolgenden Tabelle genannten Phenylendiaminderivate lassen sich analog Beispiel 1 in Oxydationsprodukte mit ähnlichen Eigenschaften überführen.

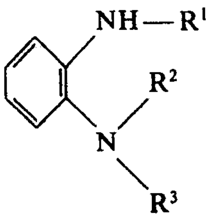

| Beispiel | $R^1$ | $R^2$ | $R^3$ | Farbton |
|---|---|---|---|---|
| 2 | H | H | $-CH_2(CH_2)_6CH_3$ | braun |
| 3 | H | H | $-C_{13}H_{27}$ | braun |
| 4 | H | H | $CH_3(CH_2)_3CHC_2H_5$<br>\| | braun |
| 5 | H | H | $-(CH_2)_3OC_{13}H_{27}$ | braun |
| 6 | H | H | $-C_2H_4OCOC_7H_{15}$ | braun |
| 7 | H | $-CH_2CHC_4H_9$<br>\|<br>$C_2H_5$ | $-CH_2CHC_4H_9$<br>\|<br>$C_2H_5$ | braun |
| 8 | H | H | $CH_3$<br>\|<br>$-CH(CH_2)_3C-OH$<br>\| \|<br>$CH_3$ $CH_3$ | braun |

Beispiel 9

29,1 Teile 3-Tridecylamino-phenol werden in 100 Teilen Isobutanol gelöst und entsprechend Beipiel 1 oxydiert. Nach dem Abdestillieren des Lösungsmittels erhält man ein festes Produkt, das als ca. 60%ige Lösung in Shellsol® AB (Aromatengemisch, Kp. 180–210°C) Wachse sowie Schuhcremes in dunkelbraunen Tönen von hohem Glanz färbt.

Die in der folgenden Tabelle genannten Phenylendiamin- und Aminophenol-Derivate lassen sich analog Beispiel 9 in Oxydationsprodukte mit ähnlichen Eigenschaften überführen.

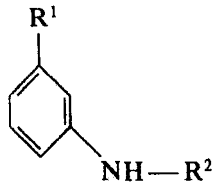

| Beispiel | $R^1$ | $R^2$ | Farbton |
|---|---|---|---|
| 10 | $-NHCH_2CHC_4H_9$<br>$C_2H_5$ | $-CH_2CHC_4H_9$<br>$C_2H_5$ | braun |
| 11 | $-NHC_{13}H_{27}$ | $-C_{13}H_{27}$ | braun, gelbstichig |
| 12 | OH | $-CH_2CHC_4H_9$<br>$C_2H_5$ | braun, gelbstichig |
| 13 | OH | $-C_{13}H_{27}$ | braun, gelbstichig |
| 14 | OH | $-(CH_2)_3OC_{13}H_{27}$ | braun, gelbstichig |

Anwendungsbeispiel

In 25 Teile einer Wachsmischung aus

8% OP-Wachs BASF,
2% AL 61-Wachs BASF,
1% Azokerit,
13% Paraffin 52/54°C und
76% Testbenzin

werden unter Rühren bei etwa 80°C 10 Teile Farbstoff gemäß Beispiel 1 sowie 75 Teile Testbenzin eingerührt. Nach dem Abkühlen erhält man eine dunkelbraune Schuhcreme von hohem Glanz.

**Patentansprüche**

1. Flüssigeinstellungen von Oxidationsfarbstoffen, die durch Oxidation von Verbindungen der allgemeinen Formel I

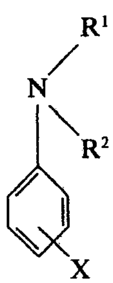

(I)

in der

$R^1$ gegebenenfalls durch Hydroxy, $C_1$- bis $C_8$-Alkoxy oder $C_1$- bis $C_8$-Alkanoyloxy substituiertes $C_2$- bis $C_{13}$-Alkyl,
$R^2$ Wasserstoff oder gegebenenfalls durch Hydroxy oder $C_1$- bis $C_8$-Alkoxy substituiertes $C_1$- bis $C_{13}$-Alkyl und

X Hydroxy, Amino oder

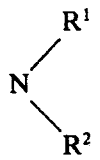

bedeuten,

in organischen Lösungsmitteln erhältlich sind.

2. Flüssigeinstellungen gemäß Anspruch 1, die ausgehend von Verbindungen der Formel

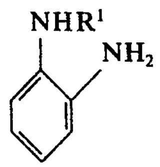

erhältlich sind.

3. Verwendung der Flüssigeinstellungen gemäß Anspruch 1 oder 2 zum Färben von Mineralölprodukten, Fetten und Wachsen.

## Claims

1. A fluid formulation of an oxidation dye, which is obtainable by oxidizing a compound of the general formula I

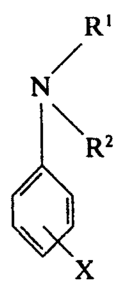

(I)

where

$R^1$ is unsubstituted or hydroxy-, $C_1$—$C_8$-alkoxy- or $C_1$—$C_8$-alkanoyloxy-substituted $C_2$—$C_{13}$-alkyl,
$R^2$ is hydrogen or unsubstituted or hydroxy- or $C_1$—$C_8$-alkoxy-substituted $C_1$—$C_{13}$-alkyl and
X is hydroxyl, amino or

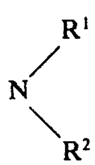

in an organic solvent.

2. A fluid formulation as claimed in claim 1, which is obtainable from a compound of the formula

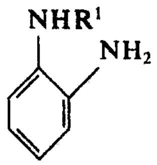

3. The use of a fluid formulation as claimed in claim 1 or 2 for dyeing mineral oil products, fats and waxes.

**Revendications**

1. Préparations liquides de colorants d'oxydation, qui peuvent être obtenues par oxydation de composés de formule I

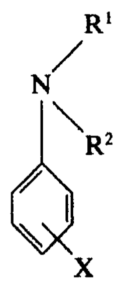

(I)

dans laquelle:

$R^1$ représente un alcoyle en $C_2$ à $C_{13}$ éventuellement substitué par un groupe hydroxy, alcoxy en $C_1$ à $C_8$ ou alcanoyloxy en $C_1$ à $C_8$,
$R^2$ représente un hydrogène ou un alcoyle en $C_1$ à $C_{13}$ éventuellement substitué par un groupe hydroxy ou alcoxy en $C_1$ à $C_8$ et
X est un radical hydroxy, amino ou

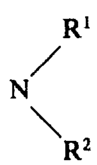

dans des solvants organiques.

2. Préparations liquides selon la revendication 1 qui peuvent être obtenues à partir de composés de formule

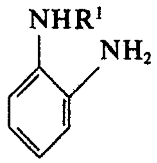

3. Utilisation des préparations liquides selon la revendication 1 ou 2 pour la coloration de produits pétroliers, de graisses et de cires.